(19) Europäisches Patentamt / European Patent Office / Office européen des brevets

(11) **EP 4 328 767 A1**

(12) **EUROPEAN PATENT APPLICATION**

(43) Date of publication:
**28.02.2024 Bulletin 2024/09**

(21) Application number: **22212071.9**

(22) Date of filing: **07.12.2022**

(51) International Patent Classification (IPC):
**G06F 17/11** $^{(2006.01)}$

(52) Cooperative Patent Classification (CPC):
**G06F 17/11**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.08.2022 CN 202211015467**

(71) Applicant: **First Institute of Oceanography, Ministry of Natural Resources Qingdao City 266061 (CN)**

(72) Inventors:
- **SHI, Honghua**
  **Qingdao City (CN)**
- **HU, Long**
  **Qingdao City (CN)**
- **ZHENG, Wei**
  **Qingdao City (CN)**
- **XIA, Tao**
  **Qingdao City (CN)**
- **WANG, Yongzhi**
  **Qingdao City (CN)**
- **YIN, Liting**
  **Qingdao City (CN)**
- **SUI, Yadong**
  **Qingdao City (CN)**

(74) Representative: **JD&P Patent Attorneys Joanna Dargiewicz & Partners Ul. Mysliborska 93A/50 03-185 Warszawa (PL)**

(54) **NONLINEAR OPTIMIZATION METHOD FOR PARAMETERS OF OCEAN ECOLOGICAL DYNAMICS MODEL**

(57) Disclosed is a nonlinear optimization method for parameters of ocean ecological dynamics model, comprising the following steps: acquiring a state variable set and a parameter set to be optimized; building an ocean ecological dynamics model; acquiring a final cost function equation group; solving the ocean ecological dynamics model to obtain numerical solutions of each state variable; acquiring a Hamilton function of the cost function equation group under a constraint condition, and acquiring an adjoint equation based on the Hamilton function; adjusting the parameter set to be optimized based on the adjoint equation to obtain an optimal parameter set.

| | |
|---|---|
| Acquiring a state variable set and a parameter set to be optimized | S1 |
| Building the ocean ecological dynamics model | S2 |
| Acquiring a final cost function equation group | S3 |
| Solving the ocean ecological dynamics model to obtain numerical solutions of each state variable in the state variable set | S4 |
| Acquiring a Hamilton function of the cost function equation group under a constraint condition, and acquiring an adjoint equation based on the Hamilton function | S5 |
| Adjusting the parameter set to be optimized based on the adjoint equation to obtain an optimal parameter set | S6 |

Figure 1

EP 4 328 767 A1

**Description**

The application belongs to the field of ocean numerical model optimization, and in particular to a nonlinear optimization method for parameters of ocean ecological dynamics model.

The parameter optimization of a simple model is relatively simple. The extreme (large) value points of state variables may be obtained by the extreme value principle, and the optimal parameter set may be determined according to the reasonable distribution range of parameters. For complex ecological dynamics models, there are many state variables, and most of them are multi-objective optimization problems, so it is difficult to directly solve the extreme points (optimal parameter sets) by analytical methods. The ecological processes of the ocean ecosystem constitute a highly complex nonlinear system. Any slight change in the parameters of the ocean ecosystem dynamics model may cause great turbulence in the whole system. Sensitivity analysis has shown that model state variables are often sensitive to most parameters.

Therefore, the parameter optimization of ocean ecological dynamics model is a very complicated problem, involving sensitivity analysis of model parameters, laboratory analysis and numerical optimization. Only the case of obtaining the optimal values of parameters by numerical means is discussed in the application.

Optimization of ocean dynamic model is one of the main problems that perplex modelers. In the past studies of numerical simulation of ecosystem dynamics, it is always a difficult point to determine the parameter values because researchers have a vague understanding of the biological and chemical processes of the research object or because of the lack of experimental data. With the deepening of the complexity of the model, this problem has become particularly prominent. Before the introduction of data assimilation method, the estimation of model parameters mainly depends on the accumulation of experience and subjective judgment, which is a heavy workload and difficult to achieve better results. The assimilation method, a combination of variational principle and optimal cybernetics, has been used increasingly in optimizing the initial field of the model, parameter estimation, external forced field and so on.

The objective of the present application is to provide a nonlinear optimization method for parameters of ocean ecological dynamics model, so as to solve the problems existing in the prior art.

In order to achieve the above objective, the present application provides a nonlinear optimization method for parameters of ocean ecological dynamics model, including:
acquiring a state variable set and a parameter set to be optimized; building an ocean ecological dynamics model; acquiring a final cost function equation group; solving the ocean ecological dynamics model to obtain numerical solutions of each state variable in the state variable set; acquiring a Hamilton function of the cost function equation group under a constraint condition, and acquiring an adjoint equation based on the Hamilton function; adjusting the parameter set to be optimized based on the adjoint equation to obtain an optimal parameter set.

Optionally, the state variable set includes initial values of phytoplankton, zooplankton, soluble inorganic nitrogen, soluble inorganic phosphorus and organic debris.

Optionally, building an initial cost function equation group based on the state variable set, a number of the state variables, a spatial interpolation function of observed values of each state variable in the state variable set in a given time interval, and an upper limit and a lower limit of the given time interval, and simplifying the initial cost function equation group into an equivalent form to obtain the final cost function equation group.

Optionally, solving the numerical solutions of each state variable based on the parameter set to be optimized, and adopting the Runge Kutta method in the process, in which the parameter set to be optimized is updated after each optimization, and the numerical solution of each state variable is solved based on the updated parameter set to be optimized.

Optionally, the adjoint equation process also includes: obtaining the Hamilton function based on a vector composed of the state variables and a vector composed of adjoint variables, obtaining a Hamilton canonical equation based on the Hamilton function, and adding boundary conditions to the Hamilton canonical equation to obtain the adjoint equation.

Optionally, a process of obtaining the optimal parameter set includes: obtaining a descending gradient of each parameter in the parameter set to be optimized based on Hamilton function, normalizing the descending gradient based on the cost function equation group, adjusting the parameter set to be optimized based on a steepest descent method, and performing cyclic iteration until a iterative parameter is less than a preset value to obtain the optimal parameter set. Optionally, a method of adjusting the parameter set to be optimized is as follows: C - δVJ =

C' , where δ is step size, VJ is the vector composed of the descending gradient of each parameter, C is an original parameter, and C' is an adjusted parameter; the step size is determined according to an optimization accuracy.

Optionally, the initial values of state variables set in the ocean ecological dynamics model are obtained through measured data in a study area.

The application has the following technical effects:
The method aims at improving the accuracy of the ocean ecological dynamics model by determining the optimization objective, selecting the optimization method, and finally giving the optimized parameter set, so that the simulation accuracy is improved and the error is reduced; all model parameters may still be screened under the condition that the measured data magnitude of different state variables changes greatly, so that the average value of the absolute value of the relative error of each state variable is small; and all model parameters may still be screened under the condition that the measured data magnitude of different state variables changes greatly, so that the error of the model is reduced and the simulation accuracy and model applicability are improved.

The drawings that form a part of this application are used to provide a further understanding of this application. The illustrative embodiments of this application and their descriptions are used to explain this application, and do not constitute undue limitations on this application.

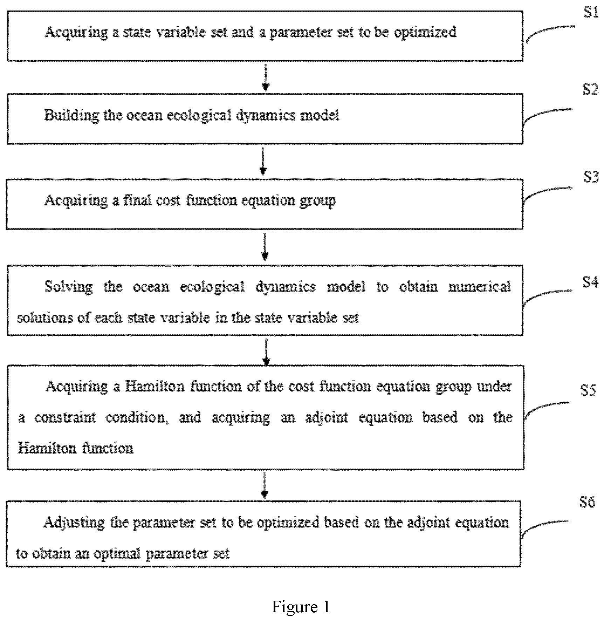

Figure 1 is a flow chart of an embodiment of the present application.

It should be noted that the embodiments in this application and the features in the embodiments may be combined with each other without conflict. The application will be described in detail with reference to the drawings and embodiments.

It should be noted that the steps shown in the flowchart of the figure may be executed in a computer system such as a set of computer-executable instructions, and although a logical sequence is shown in the flowchart, in some cases, the steps shown or described may be executed in a sequence different from the sequence here.

Embodiment 1

As shown in FIG. 1, this embodiment provides a nonlinear optimization method for parameters of ocean ecological dynamics model, including:

Ecological dynamics model and parameters

$$\begin{cases} \dfrac{dP}{dt} = f_1(U_m, K_n, K_P, G_m, \lambda, P_c, N_c, I_0, Q_1, Q_2, M_P, P, Z, DIN, DIP, t) \\[2mm] \dfrac{dZ}{dt} = f_2(\gamma, G_m, \lambda, M_Z, P_c, N_c, I_0, Q_1, Q_2, P, Z, t) \\[2mm] \dfrac{dDIN}{dt} = f_3(U_m, K_n, K_P, G_m, \lambda, \theta, e, P_c, N_c, I_0, Q_1, Q_2, P, Z, D, t) \\[2mm] \dfrac{dDIP}{dt} = f_4(U_m, K_n, K_P, G_m, \lambda, \theta, e, P_c, N_c, I_0, Q_1, Q_2, P, Z, D, t) \\[2mm] \dfrac{dD}{dt} = f_5(\gamma, \theta, G_m, \lambda, e, M_P, M_Z, P_c, P, Z, t) \end{cases}$$

$$(1),$$

where (P, Z, DIN, DIP, D)=(Y1, Y2, Y3, Y4) is the state variables (phytoplankton, zooplankton, soluble inorganic nitrogen, soluble inorganic phosphorus, organic debris), t represents time, $[U_m, k_n, k_p, G_m, \lambda, \gamma, \theta, I_0, Q_1, Q_2, M_p, M_z, e, N_c, P_c]$ is the parameter set to be optimized, and each parameter expression of the parameter set [maximum nutrient salt injection rate of phytoplankton, semi-saturation coefficient of phytoplankton absorbing DIN, semi-saturation coefficient of DIP absorption by phytoplankton, maximum feeding rate of phytoplankton, Ivlev intake constant, zooplankton growth and absorption, zooplankton excretion coefficient, average sea surface light intensity, growth temperature dependence coefficient, ingestion temperature dependence coefficient, phytoplankton mortality rate, zooplankton mortality rate, debris remineralization rate, phytoplankton nitrogen-carbon ratio, phytoplankton phosphorus-carbon ratio]. The initial values of the model variables are assigned according to the observation data of the study sea area.

The initial values of model variables are generated by moving average of monthly observation data of a bay from January 2003 to January 2004, and the moving average step is March. After moving, the average initial values of phytoplankton, zooplankton, DIN, DIP and organic debris are 11.4919, 0.2670, 7.7479, 0.2212 and 21.7202 respectively (the units are all converted into umol/L), and the forced initial values of light intensity and temperature are 84/m2 and 7.1 °C.

Adjoint method

Optimization objective

Determine the reasonable parameter set to minimize the value of the following cost function:

$$\frac{1}{m \cdot (T - t_0)} \min_{Y} \sqrt{\int_{t_0}^{T} \sum_{i=1}^{m} \left( \frac{Y_i - Obs_i}{Obs_i} \right)^2 dt}$$

$$s.t. \begin{cases} \dfrac{dY_i}{dt} = f_i \\ Y_i(t_0) = Y_{i0} \end{cases} \tag{2},$$

where $Obs_i$ is the spatial interpolation function of the observed value of the i-th state variable in the interval [to, T]. $Y_i$ represents each state variable in the ecological dynamics model. The unit of t is day (d). m is the number of state variables.

This method eliminates the difference of dimensions of different state variables, and may still screen the model parameters even when the magnitude of measured data of different state variables changes greatly, so that the solutions obtained by each parameter is closer to the measured data, the average value of the absolute value of the relative error is small, which may well reflect the actual situation.

Steps to optimize the parameters of differential equations by adjoint method

Simplify the original problem

Let the original ecological dynamics model be:

$$\begin{cases} \dfrac{dP}{dt} = f_1 \\ \dfrac{dZ}{dt} = f_2 \\ \dfrac{dDIN}{dt} = f_3 \\ \dfrac{dDIP}{dt} = f_4 \\ \dfrac{dD}{dt} = f_5 \end{cases} \tag{3},$$

in order to facilitate the derivation operation later, the original programming problem (2) is simplified to the equivalent form as follows:

$$J = \frac{1}{m \cdot (T - t_0)} \min_{Y} \frac{1}{T} \int_{t_0}^{T} \sum_{i=1}^{m} \left( \frac{Y_i - Obs_i}{Obs_i} \right)^2 dt$$

$$s.t. \begin{cases} \dfrac{dY_i}{dt} = f_i \\ Y_i(t_0) = Y_{i0} \end{cases} \tag{4},$$

solving differential equations (groups)

According to the default parameter set (the default parameter is adopted for the first time and updated after each optimization), the numerical solution of Y is calculated by the Runge Kutta method.

Adjust parameter direction to obtain Hamilton function of the original equation with constraints. For the programming problem (4), Hamilton function is as follows:

$$H(\vec{Y},\vec{\lambda}) = \sum_{i=1}^{m}\left[\frac{1}{m\cdot(T-t_0)}\cdot\left(\frac{Y_i-Obs_i}{Obs_i}\right)^2 + \lambda_i\cdot f_i\right] \qquad (5),$$

where $\vec{Y} = (Y_1,Y_2,\Lambda,Y_m) = (P,Z,DIN,DIP,D)$ is a vector composed of state variables and $\vec{\lambda} = (\lambda_1,\lambda_2,\Lambda,\lambda_m)$ is a vector composed of adjoint variables.

solving the adjoint equation

The solution of adjoint equation depends on Hamilton gauge equation in variational principle;

$$\frac{\partial H}{\partial \vec{Y}} + \frac{d\vec{\lambda}}{dt} = 0 \qquad (6),$$

after adding boundary conditions, the adjoint equation may be obtained:

$$\begin{cases} \dfrac{2}{m\cdot(T-t_0)}\cdot\left(\dfrac{Y_i-Obs_i}{Obs_i}\right) + \lambda_i\cdot\dfrac{\partial f_i}{\partial Y_i} = 0 \qquad (i=1,2,\Lambda,m) \\ \lambda_i(T) = 0 \end{cases} \qquad (7),$$

Parameter adjusting direction

According to the conditions for multivariate functions to obtain extreme values, when $\begin{cases}\dfrac{\partial H}{\partial p_i} = 0\end{cases}$ (i = 1, 2, ···, 24, $p_i$, $p_i$ represents the i-th parameter, the parameters are arranged in the order of [$U_m$ $k_n$ $k_p$ $G_m$ $\lambda$ $\gamma$ $\theta$ $I_0$ $Q_1$ $Q_2$ $M_p$ $M_z$ e $N_c$ $P_c$], and H is Hamilton function), the function obtains extreme values.

Therefore,

$$\nabla_{p_i}J = \frac{\partial J}{\partial p_i} = -\frac{\partial \int_{t_0}^{T}\lambda_i\cdot f_i\,dt}{\partial p_i} = -\int_{t_0}^{T}\lambda_i\cdot\frac{\partial f_i}{\partial p_i}\,dt \qquad (8),$$

If $\|J\| < \varepsilon$, the iteration is terminated ($\varepsilon$ is the iteration termination parameter given in advance).

Parameter adjustment

(1) Parameter normalization

The obtained cost function normalizes the gradient $\nabla_{pi}J$ of each parameter $p_i$, that is:

$$\nabla_{p_i}J \Leftarrow \frac{\nabla_{p_i}J}{\|\nabla J\|} \qquad (9),$$

where, $\nabla J$ is the vector composed of $\nabla_{pi}J$, namely $\nabla J = [\nabla_{pi}J]$.

(2) Parameter adjustment

According to the principle of the steepest descent method, the parameters of the original equation are readjusted so that

$$[p_i] = C \Leftarrow C - \delta \nabla J \qquad (10)$$

where $\delta$ are the step size, and then the numerical solution of the state variables of the ecological dynamics model is resolved. Determine the adjustment coefficient according to the accuracy requirement (for example, the step size may be 10-3 or other value).

In this way, after many times of parameter adjustment, the values of the simulated state variables are constantly close to the real data, and finally a satisfactory result is achieved.

It should be noted that the parameter optimization of this method is only to improve the simulation accuracy, but after optimization, some parameters may have lost the true ecological significance. At this time, the parameter may also be set in the value range or not participate in the optimization.

Due to the nonlinear relationship among the state variables, the parameter optimization of ocean ecological dynamics model is a very complicated problem, especially the optimization of numerical methods is aimed at minimizing the cost function. In fact, the selection of parameters is limited by the actual value range, and some parameter sets that minimize the cost function may have no practical significance. Therefore, the problem of parameter optimization involves multi-disciplinary knowledge. As a suggestion, the following parameter optimization scheme is proposed:

(1) try to use the measured data or experimental results data, focusing on the optimization of parameters that have not been measured;
(2) because the model is only an approximate description of the ecological dynamics mechanism, the accuracy of the model depends on the initial values of parameters, the initial values of state variables and the model itself.

In this model, the initial values of model state variables are measured data in the study area, and the cost function is also constructed based on the observed values. However, the error of the predicted value is closely related to the model assumption. For example, the supplement of exogenous nutrients and the foreign exchange in the bay are not considered in the model, which is idealized in practice. Therefore, as an approximate expression of the ecological dynamic process of the bay, it is inevitable that there will be some errors when the measured data is used as a test sample.

The adjoint assimilation method is adopted in the embodiment, the cost function is reduced from 0.4085 to 0.0304, the global average error is reduced from 63.91% to 17.42%, and the average sampling error is reduced from 37.45% to 10.88%, which shows that adjoint method is very effective in model parameter optimization.

The above are only the preferred embodiments of this application, but the scope of protection of this application is not limited to this. Any changes or substitutions that may be easily thought of by those skilled in the technical field within the technical scope disclosed in this application should fall in the scope of protection of this application. Therefore, the scope of protection of this application should be based on the scope of protection of the claims.

**Claims**

1.    A nonlinear optimization method for parameters of an ocean ecological dynamics model, comprising:
S1, acquiring a state variable set and a parameter set to be optimized; S2, building the ocean ecological dynamics model; S3, acquiring a final cost function equation group; S4, solving the ocean ecological dynamics model to obtain numerical solutions of each state variable in the state variable set; S5, acquiring a Hamilton function of the cost function equation group under a constraint condition, and acquiring an adjoint equation based on the Hamilton function; and S6 adjusting the parameter set to be optimized based on the adjoint equation to obtain an optimal parameter set; wherein:

an initial cost function equation group is built based on the state variable set, a number of the state variables, a spatial interpolation function of observed values of each state variable in the state variable set in a given time interval, and an upper limit and a lower limit of the given time interval, and the initial cost function equation group is simplified into an equivalent form to obtain the final cost function equation group;

the numerical solutions of each state variable are solved based on the parameter set to be optimized, and the Runge Kutta method is adopted in the process; the parameter set to be optimized is updated after each optimization, and the numerical solution of each state variable is solved based on the updated parameter set to be optimized;

the adjoint equation process also comprises: obtaining the Hamilton function based on a vector composed of the state variables and a vector composed of adjoint variables, obtaining a Hamilton canonical equation based on the Hamilton function, and adding boundary conditions to the Hamilton canonical equation to obtain the adjoint equation;

a process of obtaining the optimal parameter set comprises: obtaining a descending gradient of each parameter in the parameter set to be optimized based on the Hamilton function, normalizing the descending gradient based on the cost function equation group, adjusting the parameter set to be optimized based on a steepest descent method, and performing cyclic iteration until an iterative parameter is less than a preset value to obtain the optimal parameter set; and

a method of adjusting the parameter set to be optimized is as follows: $C - \delta \nabla J = C'$, wherein

$\delta$ is step size, $\nabla J$ is the vector composed of the descending gradient of each parameter, $C$ is an original parameter, $C'$ is an adjusted parameter, and the step size is determined according to an optimization accuracy.

2. The nonlinear optimization method for parameters of an ocean ecological dynamics model according to claim 1, wherein the state variable set comprises initial values of phytoplankton, zooplankton, soluble inorganic nitrogen, soluble inorganic phosphorus and organic debris.

3. The nonlinear optimization method for parameters of an ocean ecological dynamics model according to claim 1, wherein the initial values of state variables set in the ocean ecological dynamics model are obtained through measured data in a study area.

Acquiring a state variable set and a parameter set to be optimized — S1

Building the ocean ecological dynamics model — S2

Acquiring a final cost function equation group — S3

Solving the ocean ecological dynamics model to obtain numerical solutions of each state variable in the state variable set — S4

Acquiring a Hamilton function of the cost function equation group under a constraint condition, and acquiring an adjoint equation based on the Hamilton function — S5

Adjusting the parameter set to be optimized based on the adjoint equation to obtain an optimal parameter set — S6

Figure 1

| | Europäisches Patentamt<br>European Patent Office<br>Office européen des brevets | **EUROPEAN SEARCH REPORT** | Application Number<br>**EP 22 21 2071** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VISHWAS RAO ET AL: "A Highly Scalable Approach for Time Parallelization of Long Range Forecasts",<br>HIGH PERFORMANCE COMPUTING, NETWORKING, STORAGE AND ANALYSIS (SCC), 2012 SC COMPANION:, IEEE,<br>10 November 2012 (2012-11-10), pages 609-616, XP032425612,<br>DOI: 10.1109/SC.COMPANION.2012.85<br>ISBN: 978-1-4673-6218-4<br>* sections I and II * | 1-3 | INV.<br>G06F17/11 |
| A | CN 111 859 249 A (UNIV TIANJIN)<br>30 October 2020 (2020-10-30)<br>* Steps 1-7 * | 1-3 | |
| A | CN 107 292 436 B (UNIV BEIJING TECHNOLOGY & BUSINESS) 17 July 2020 (2020-07-17)<br>* Steps 1-5 * | 1-3 | |
| | | | TECHNICAL FIELDS SEARCHED (IPC)<br><br>G06F |

The present search report has been drawn up for all claims

| Place of search | Date of completion of the search | Examiner |
|---|---|---|
| Berlin | 28 June 2023 | Virnik, Elena |

EPO FORM 1503 03.82 (P04C01)

## ANNEX TO THE EUROPEAN SEARCH REPORT
## ON EUROPEAN PATENT APPLICATION NO.

EP 22 21 2071

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2023

| Patent document cited in search report | | Publication date | Patent family member(s) | Publication date |
|---|---|---|---|---|
| CN 111859249 | A | 30-10-2020 | NONE | |
| CN 107292436 | B | 17-07-2020 | NONE | |

EPO FORM P0459

For more details about this annex : see Official Journal of the European Patent Office, No. 12/82